# EUROPEAN PATENT SPECIFICATION

(11) **EP 1 923 429 B1**
(45) Date of publication and mention of the grant of the patent: **17.04.2013**
(21) Application number: 06797743.9
(22) Date of filing: 04.09.2006
(51) Int. Cl.: C08L 23/08, C08L 23/02, H01B 7/295, C08L 67/02, H01B 3/42, H01B 3/44, C08L 31/04, C08K 3/00, C08L 23/00

(54) **FLAME-RETARDANT RESIN COMPOSITION, AND ELECTRIC WIRE AND INSULATING TUBE USING SAME**
FLAMMWIDRIGE HARZZUSAMMENSETZUNG UND ELEKTRISCHER DRAHT UND ISOLIERSCHLAUCH DAMIT
COMPOSITION DE RÉSINE IGNIFUGE, ET CÂBLE ÉLECTRIQUE ET TUBE ISOLANT L UTILISANT

(30) Priority: 09.09.2005 JP 2005261486
(43) Date of publication of application: 21.05.2008
(73) Proprietor: Sumitomo Electric Industries, Ltd., Osaka-shi, Osaka 541-0041 (JP)
(72) Inventor: MORIUCHI, Kiyoaki, Osaka-shi, Osaka 554-0024 (JP); HAYAMI, Hiroshi, Osaka-shi, Osaka 554-0024 (JP)
(74) Representative: Cross, Rupert Edward Blount
(86) International application number: PCT/JP2006/317917
(87) International publication number: WO 2007/029833

(56) References cited:
- WO-A1-90/02775
- JP-A- 07 207 126
- JP-A- 08 269 307
- JP-A- 52 065 880
- JP-A- 2000 080 223
- JP-A- 2001 316 571
- JP-A- 2002 080 813
- JP-A- 2002 358 837
- JP-A- 2003 335 904
- JP-A- 2004 006 376
- JP-A- 2004 010 840
- JP-A- 2004 359 836
- US-A1- 2005 137 303

## Description

### TECHNICAL FIELD

The present invention relates to a flame-retardant resin composition, and particularly to a flame-retardant resin composition that contains a blend of a thermoplastic polyester resin and a polyolefin resin as a resin component, exhibits high flame retardancy without containing a halogen-containing flame retarder and can be formed into a coating layer excellent in mechanical properties, heat resistance, thermal aging resistance, heat distortion resistance, low temperature property (flexibility at low temperature), electric insulating property and the like.

The present invention also relates to electric wires having a coating layer formed from the above flame-retardant resin composition, such as an insulated wire, an insulated and shielded wire and an insulated cable. The present invention further relates to an insulating tube formed from the flame-retardant resin composition.

### BACKGROUND ART

Various kinds of electric wires such as insulated wires, shielded wires and insulated cables are insulated and coated with a coating material on their conductors or sheaths. As coating materials for electric wires such as insulated wires and insulated cables used in internal wiring of electronic equipments, are commonly used polyvinyl chloride resins and polyolefin resin compositions with a flame retarder incorporated therein. As the polyvinyl chloride resins, are used soft polyvinyl chloride resins obtained by incorporating a plasticizer and a stabilizer. Ethylene copolymers such as ethylene-vinyl acetate copolymers and ethylene-ethyl acrylate copolymers are representative of the polyolefin resins. As the flame retarder, is used a halogen-containing flame retarder containing bromine atom(s) and/or chlorine atom(s) in its molecule. Among halogen-containing flame retarders, bromine-containing flame retarders containing bromine atom(s) in their molecules are high in flame-retarding effect, and flame retardation is generally achieved by utilizing a synergistic effect by using them in combination with antimony oxide. The bromine-containing flame retarders also have a high effect in combination with a phosphorus compound.

However, when an electric wire insulated and coated with such a coating material is discarded, the plasticizer, heavy metal stabilizer or phosphorus compound contained in the coating material is dissolved out to contaminate an environment. In addition, when the electric wire insulated and coated with such a coating material is incinerated, there is a possibility that corrosive gases and dioxins may be generated from the polyvinyl chloride resin or halogen-containing flame retarder contained in the coating material. In recent years, halogen-free electric wires using neither a polyvinyl chloride resin nor a halogen-containing flame retarder have been developed in order to meet the enhanced requirement for reduction of environmental burden.

On the other hand, electric wires such as insulated wires and insulated cables used in internal wiring of electronic equipments are required to meet the UL (Underwriters Laboratories Inc.) Standards. The UL Standards prescribe various properties for products to be satisfied, such as flame retardancy, heat distortion resistance, low temperature property and tensile properties initial and after thermal aging of a coating material in detail. Among these, with respect to the flame retardancy, it is necessary to pass a vertical flame test called a VW-1 test. This test is one of the most severe requirements among the UL Standards.

As coating materials for the halogen-free electric wires, are used resin compositions obtained by incorporating a metal hydroxide (also referred to as "metal hydrate") such as magnesium hydroxide or aluminum hydroxide into a polyolefin resin to make the resin flame-retardant. Since the flame-retarding effect of the metal hydroxide is low compared with the halogen-containing flame retarders, however, it is necessary to incorporate a great amount of the metal hydroxide into the polyolefin resin for the purpose of passing the vertical flame test VW-1. As a result, the tensile properties (tensile strength and tensile elongation), heat distortion resistance of the resulting coating material are markedly lowered.

The tensile properties and heat distortion resistance can be improved by irradiating a coating layer formed of a resin composition with a metal hydroxide incorporated into a polyolefin resin with ionizing radiation such as an accelerated electron beam to crosslinking it. However, such a halogen-free flame-retardant resin composition as described above requires an expensive irradiation apparatus for irradiation of the ionizing radiation in addition of its high price compared with the polyvinyl chloride resin, so that it has involves a demerit that its production cost further runs up. There is thus a demand for development of a halogen-free electric wire that satisfies the UL standards without conducting a crosslinking treatment.

There have heretofore been proposed, as halogen-free flame-retardant resin compositions, a resin composition for transmission line coating obtained by incorporating a great amount of a metal hydrate into a resin component containing an ethylene copolymer and a polyester elastomer (Japanese Patent Application Laid-Open No. 2004-10840) and a flame-retardant resin composition obtained by melt-kneading a metal hydrate treated with an organic peroxide and a silane coupling agent into a resin component containing an ethylene copolymer and a thermoplastic resin having a polyester type and/or a polyether type segment (Japanese Patent Application Laid-Open No. 2004-51903).

Japanese Patent Application Laid-Open No. 2004-10840 and Japanese Patent Application Laid-Open No. 2004-51903 disclose that for example, a thermoplastic polyester elastomer (product of Du Pont-Toray Co., Ltd., trade name "HYTREL 4057") is used as the polyester elastomer or thermoplastic resin. This thermoplastic polyester elastomer is a thermoplastic block-copolymerized polyester resin. However, it has been proved that a flame-retardant resin composition containing such a thermoplastic block-copolymerized polyester resin is not always sufficient in flame retardancy and insulation resistance, and a passing rate on the vertical flame test VW-1 is not high.

US 2005/0137303 A1 relates to blends of aliphatic-aromatic copolyesters with ethylene-vinyl acetate copolymers. WO 90/02775 relates to an impact resistant polyester and polyamide moulding material. JP 2002 080813 A relates to an adhesive composition and insulating tape for flat cable usings this.

### DISCLOSURE OF THE INVENTION

It is an object of the present invention to provide a flame-retardant resin composition, which exhibits high flame retardancy passing the vertical flame test VW-1 of the UL Standards without containing a halogen-containing flame retarder and can be formed into a coating layer excellent in mechanical properties, heat resistance, thermal aging resistance, heat distortion resistance, low temperature property, electric insulating property.

Another object of the present invention is to provide an electric wire having a coating layer formed of the flame-retardant resin composition excellent in various properties as described above, such as an insulated wire, an insulated and shielded wire or an insulated cable. A further object of the present invention is to provide an insulating tube formed from the flame-retardant resin composition excellent in various properties as described above.

The present inventors have carries out an extensive investigation with a view toward solving the above-described problems. As a result, it has been found that a flame-retardant resin composition, which exhibits high flame retardancy passing the vertical flame test VW-1 of the UL Standards without conducting a crosslinking treatment by ionizing radiation and can be formed into a coating layer excellent in mechanical properties (tensile strength and tensile elongation at break), heat resistance, thermal aging resistance, heat distortion resistance, low temperature property, electric insulating property is obtained by incorporating a specific amount of an inorganic filler into a resin component containing a thermoplastic random-copolymerized polyester resin and a polyolefin resin in specific proportions. As the inorganic filler, may be used not only a metal hydrate known as an inorganic flame retarder such as a metal hydroxide, but also a commonly used filler such as calcium carbonate or talc.

The flame-retardant resin composition according to the present invention exhibits excellent various properties as a coating layer for insulated wires, insulated cables and insulated and shielded wires. The flame-retardant resin composition according to the present invention can be formed into an insulating tube. The insulating tube according to the present invention can be suitably used for junction of insulated wires, insulated cables or the like, or insulation and protection thereof. The present invention has been led to completion on the basis of these findings.

According to the present invention, there is thus provided a flame-retardant resin composition according to claim 1 of the claims appended hereto.

According to the present invention, there are also provided an insulated wire comprising a conductor and a coating layer formed from the above-described flame-retardant resin composition thereon; an insulated and shielded wire comprising, as a sheath, a coating layer formed from the above-described flame-retardant resin composition; and an insulated cable comprising a single-core or multiconductor insulated wire and a coating layer formed from the above-described flame-retardant resin composition as a sheath thereof. According to the present invention, there is further provided an insulating tube formed from the above-described flame-retardant resin composition.

According to the present invention, there can be provided flame-retardant resin compositions, which exhibit high flame retardancy passing the vertical flame test VW-1 of the UL Standards without conducting a crosslinking treatment by ionizing radiation and can be formed into a coating layer excellent in mechanical properties, heat resistance, thermal aging resistance, heat distortion resistance, low temperature property, electric insulating property. According to the present invention, there can thus be provided insulated wires, insulated cables, insulated and shielded wires, and insulating tubes.

### BEST MODE FOR CARRYING OUT THE INVENTION

The thermoplastic random-copolymerized polyester resin used in the present invention is as described in claim 1.

In order to random-copolymerize these monomer components, there can be adopted a process comprising collectively charging these monomer components into a reactor and subjecting them to a polycondensation reaction. These monomer components are random-copolymerized, thereby controlling the melting point and crystallinity of the resulting resin. As a result, a thermoplastic random-copolymerized polyester resin improved in properties such as extrudability, flexibility, heat stability and electric insulating property can be obtained.

In the present invention, the term "plural components" means, in the case of the carboxylic acid component, not only a combination of, for example, the aromatic dicarboxylic acid component and the aliphatic dicarboxylic acid component, or the aliphatic hydroxycarboxylic acid component or the cyclic ester component thereof, but also a case where the aromatic carboxylic acid component is a combination of, for example, a terephthalic acid component and an isophthalic acid component. Likewise, in the case of the glycol component, the term "plural components" means not only a combination of, for example, the aliphatic diol component and the alicyclic diol component, but also a case where the glycol component is a combination of, for example, 1,4-butanediol and 1,6-hexanediol that are both aliphatic diol components. As described above, the term "plural components" also means a combination of plural components of the same kind.

In the present invention, the carboxylic acid components such as the aromatic dicarboxylic acid component, alicyclic dicarboxylic acid component and aliphatic dicarboxylic acid component mean dicarboxylic acids having free carboxyl groups, such as aromatic dicarboxylic acids, alicyclic dicarboxylic acids and aliphatic dicarboxylic acids, but also lower alkyl esters thereof. The alkyl group of the lower alkyl ester means an alkyl group having 1 to 5 carbon atoms, such as a methyl, ethyl or isopropyl group. A methyl group is generally preferred as the lower alkyl group. The carboxylic acid components used in the present invention include not only these dicarboxylic acid components, but also aliphatic hydroxycarboxylic acids containing a carboxyl group and cyclic esters thereof. The aliphatic hydroxycarboxylic acid component includes an aliphatic hydroxycarboxylic acid and an alkyl ester thereof. The glycol component means a dihydric alcohol.

It is essential from the viewpoints of mechanical strength, heat resistance, chemical resistance, electric insulating property to contain the aromatic dicarboxylic acid component as an essential component of the carboxylic acid component. It is essential from the viewpoints of extrudability, flexibility, thermal aging resistance to contain at least one selected from the group consisting of the aliphatic dicarboxylic acid component (reference example), aliphatic hydroxycarboxylic acid component (present invention) and aliphatic hydroxycarboxylic acid cyclic ester component (present invention) as the carboxylic acid component. As the carboxylic acid component, other carboxylic acid components than the above-described components, such as an unsaturated aliphatic dicarboxylic acid component, may be contained as needed.

Examples of the aromatic dicarboxylic acid component include terephthalic acid, isophthalic acid, orthophthalic acid, 2,6-naphthalenedicarboxylic acid, 1,8-naphthalenedicarboxylic acid, p-phenylenedicarboxylic acid, diphenylsulfonedicarboxylic acid, diphenoxyethane-dicarboxylic acid and lower alkyl esters thereof. Among these, terephthalic acid, isophthalic acid and lower alkyl esters thereof are preferred, with dimethyl terephthalate and dimethyl isophthalate being more preferred.

In the present invention, the aliphatic hydroxycarboxylic acid component and/or the aliphatic hydroxycarboxylic acid cyclic ester component is used together with the aromatic dicarboxylic acid component as the carboxylic acid component from the above-described reason. The hydroxycarboxylic acid is also referred to as a hydroxy acid and is a compound heretofore called an oxyacid or oxycarboxylic acid. The hydroxycarboxylic acid is a compound having a carboxyl group -COOH and an alcoholic hydroxyl group -OH in a molecule. In the present invention, the aliphatic hydroxycarboxylic acid (also referred to as "hydroxyalkanic acid") is used. Examples of the hydroxycarboxylic acid include glycolic acid, lactic acid and hydroxycapronic acid (also referred to as "ε-oxycapronic acid") . Among these, hydroxycapronic acid is preferred.

Two molecules or one molecule of the aliphatic hydroxycarboxylic acid loses two molecules or one molecule of water according to its molecular structure to form a cyclic ester. In the present invention, such a cyclic ester may also be used. Examples of the aliphatic hydroxycarboxylic acid cyclic ester include glycolide, lactide and lactones. Examples of the lactones include β-propiolactone, β-butyrolactone, pivalolactone, γ-butyrolactone, δ-valerolactone, β-methyl-δ-valerolactone and ε-caprolactone. Among these cyclic esters, ε-caprolactone that is a cyclic ester of hydroxycapronic acid is preferred. The cyclic ester is incorporated into the resulting random-copolymerized polyester resin by opening its ring upon the polycondensation reaction.

Examples of the aliphatic dicarboxylic acid include succinic acid, glutaric acid, adipic acid, suberic acid, azelaic acid, sebacic acid, dodecanedioic acid and dimeric acid. The aliphatic dicarboxylic acid may be a lower alkyl ester thereof. Among these, a sebacic acid component composed of sebacic acid and a lower alkyl ester thereof is preferred.

Examples of the alicyclic dicarboxylic acid include 1,4-cyclohexanedicarboxylic acid and lower alkyl esters thereof.

As the carboxylic acid component, a polyvalent carboxylic acid component composed of a polyvalent carboxylic acid such as trimellitic acid, pyromellitic acid or sodium sulfoisophthalate, and a lower alkyl ester thereof may be used in a low proportion in combination with the above-described carboxylic acid component as needed.

In the present invention, an unsaturated aliphatic dicarboxylic acid component may be used in a low proportion in combination with the above-described carboxylic acid component as needed. The unsaturated aliphatic dicarboxylic acid component is an aliphatic dicarboxylic acid having a carbon-carbon double bond in a molecule, or a lower alkyl ester or acid anhydride thereof. More specifically, as the unsaturated aliphatic dicarboxylic acid component are more preferred fumaric acid, maleic acid, citraconic acid, mesaconic acid, and a lower alkyl esters and acid anhydrides thereof, with fumaric acid and dimethyl fumarate being particularly preferred.

Examples of the glycol component include aliphatic diols such as ethylene glycol, 1,2-propylene glycol, 1, 4-butanediol, 1,5-pentanediol, 1,6-hexanediol, 1,7-heptanediol, 1,8-octanediol, 1,9-nonanediol, 1,10-dodecanediol and neopentyl glycol; and alicyclic diols such as cyclohexanedimethanol. As the glycol component, is preferred an aliphatic diol, and an aliphatic linear diol is more preferred. As the aliphatic linear diol, 1,4-butanediol and 1, 6-hexanediol are preferred from the viewpoint of the balance between various properties, with 1,4-butanediol being more preferred.

The thermoplastic random-copolymerized polyester resin used in the present invention is preferably a polycondensate of one or more carboxylic acid components and one or more glycol components and can be generally synthesized by causing the whole carboxylic acid component and the whole glycol component to react in an equimolar proportion.

In a reference example, as the carboxylic acid component, may be used only at least one aromatic dicarboxylic acid component. From the viewpoint of balancing various properties such as tensile properties with each other, a carboxylic acid component comprising the aromatic dicarboxylic acid component in a proportion of 40 to 90 mol%, preferably 50 to 85 mol%, particularly preferably 60 to 80 mol% with the whole carboxylic acid component regarded as 100 mol% is required. The remainder of the carboxylic acid component is at least one selected from the group consisting of the aliphatic dicarboxylic acid component (reference example), aliphatic hydroxycarboxylic acid component (present invention) and aliphatic hydroxycarboxylic acid cyclic ester component (present invention).

As described above, the thermoplastic random-copolymerized polyester resin used in the present invention is a polycondensate of at least two carboxylic acid components and a glycol component. It is essential that the carboxylic acid components comprise the aromatic dicarboxylic acid component and the aliphatic hydroxycarboxylic acid component and/or the aliphatic hydroxycarboxylic acid cyclic ester component, and the glycol component comprises the aliphatic diol component.

A carboxylic acid component comprising the aromatic dicarboxylic acid component in a proportion of 40 to 90 mol%, preferably 50 to 85 mol%, particularly preferably 60 to 80 mol% with the whole carboxylic acid component regarded as 100 mol%, and the aliphatic hydroxycarboxylic acid component and/or the aliphatic hydroxycarboxylic acid cyclic ester component in a proportion of preferably 10 to 60 mol%, preferably 15 to 50 mol%, particularly preferably 20 to 40 mol% is required from the viewpoint of balancing various properties such as mechanical strength, heat resistance, chemical resistance, extrudability, flexibility, heat stability and electric insulating property with one another at a high level. As the aliphatic hydroxycarboxylic acid component and/or the aliphatic hydroxycarboxylic acid cyclic ester component, are preferred hydroxycapronic acid and ε-caprolactone, with ε-caprolactone being more preferred.

As the aromatic dicarboxylic acid component, terephthalic acid or a lower alkyl ester thereof (hereinafter referred to as "terephthalic acid component" collectively) is preferably contained as an essential component. As the aromatic dicarboxylic acid component, the terephthalic acid component and isophthalic acid or a lower alkyl ester thereof (hereinafter referred to as "isophthalic acid component" collectively) are preferably used in combination. A proportion of the terephthalic acid component to the isophthalic acid component used is preferably 50:50 to 100:0, more preferably 60:40 to 100:0 in terms of a molar ratio. When the isophthalic acid component is used in combination, the proportion of the terephthalic acid component to the isophthalic acid component used is desirably controlled to preferably 50:50 to 95:5, more preferably 60:40 to 90:10 in terms of a molar ratio in order to balance mechanical strength with flexibility.

As the carboxylic acid component, in addition to the aromatic dicarboxylic acid component, and the aliphatic hydroxycarboxylic acid component and/or the aliphatic hydroxycarboxylic acid cyclic ester component, the aliphatic dicarboxylic acid component is desirably contained in a proportion of preferably at most 40 mol%, more preferably at most 30 mol% based on the whole carboxylic acid component in order to control properties of the resulting thermoplastic random-copolymerized polyester resin, such as glass transition temperature and melt flow rate. As the aliphatic dicarboxylic acid component, are preferred sebacic acid and lower alkyl esters thereof.

In the carboxylic acid component, the unsaturated aliphatic dicarboxylic acid component may be further contained in a proportion of preferably at most 10 mol%, more preferably at most 5 mol% as needed. The unsaturated aliphatic dicarboxylic acid component such as dimethyl fumarate is contained in a low proportion, whereby a coating layer or insulating tube formed of the resulting resin composition can be crosslinked as needed.

The thermoplastic random-copolymerized polyester resin can be synthesized by collectively charging the whole carboxylic acid component and the whole glycol component into a reactor and then subjecting them to a polycondensation reaction. More specifically, the thermoplastic random-copolymerized polyester resin can be prepared by a process comprising collectively charging the whole carboxylic acid component and the whole glycol component into a reactor to first conduct a transesterification reaction under heating and reduced pressure using a catalyst, for example, an organotitanium compound (for example, n-butyl titanate) in accordance with a method known *per se* in the art to form a prepolymer, and then causing the polycondensation reaction to further progress to make the molecular weight of the resulting product high.

The kinds of the monomers such as the carboxylic acid component and glycol component used and the proportions thereof are adjusted, whereby the physical properties, such as melting point, glass transition temperature and elastic modulus, of the resulting thermoplastic random-copolymerized polyester resin can be controlled. For example, crystallinity, glass transition temperature and elastic modulus vary according to a ratio of the aromatic dicarboxylic acid component to the aliphatic dicarboxylic acid component and the aliphatic hydroxycarboxylic acid component or aliphatic hydroxycarboxylic acid cyclic ester component. The crystallinity and elastic modulus become high as the proportion of the aromatic dicarboxylic acid component increases. The crystallinity becomes low as the proportion of the aliphatic dicarboxylic acid component and the aliphatic hydroxycarboxylic acid component or aliphatic hydroxycarboxylic acid cyclic ester component increases, and the elastic modulus and glass transition temperature also tend to become low. Therefore, the properties of the thermoplastic random-copolymerized polyester resin may be suitably set according to the kind of the polyolefin resin to be blended and the kind and amount of the inorganic filler incorporated.

The melt flow rate (MFR) of the thermoplastic random-copolymerized polyester resin used in the present invention as measured under conditions of a temperature of 190°C and a load of 2.16 kg is within a range of preferably from 0.1 to 100 g/10 min., more preferably from 0.5 to 50 g/10 min., particularly preferably from 1 to 30 g/10 min. In the present invention, as the thermoplastic random-copolymerized polyester resin, may also be used that having a melt flow rate (MFR) ranging preferably from 0.5 to 80 g/10 min., more preferably from 1 to 50 g/10 min., particularly preferably from 3 to 30 g/10 min. as measured under conditions of a temperature of 235°C and a load of 2.16 kg. If the MFR of the thermoplastic random-copolymerized polyester resin is too low or too high, its extrudability upon forming a coating layer is lowered.

The melting point of the thermoplastic random-copolymerized polyester resin used in the present invention as measured by means of a deferential scanning calorimeter (DSC) is within a range of preferably from 100 to 215°C, more preferably from 110 to 200°C, still more preferably from 120 to 180°C.

The glass transition temperature (Tg) of the thermoplastic random-copolymerized polyester resin used in the present invention as measured by means of DSC is within a range of preferably from -30°C to +40°C, more preferably from -25°C to +35°C, still more preferably from -20°C to +30°C.

As thermoplastic polyester resins, have heretofore been known thermoplastic block-copolymerized polyesters (i.e., "thermoplastic polyester elastomers") having a crystalline hard segment composed of polybutylene terephthalate or the like and a soft segment composed of a polyether such as polytetramethylene glycol or a polyester such as polycaprolactone (the above-described Japanese Patent Application Laid-Open No. 2004-10840 and Japanese Patent Application Laid-Open No. 2004-51903). However, the thermoplastic block-copolymerized polyester resin is insufficient in compatibility with the polyolefin resin, and the flame retardancy, electric insulating property, tensile properties and thermal aging resistance of a resin composition obtained by incorporating a metal hydroxide into its blend with the polyolefin resin, and so such a resin composition is inferior to the resin composition according to the present invention in these various properties.

Examples of the polyolefin resin used in the present invention include polyethylene, ethylene copolymers, polypropylene, propylene copolymers, acid-modified polymers thereof, epoxy-modified polymers thereof, olefinic thermoplastic elastomers, and mixtures of 2 or more polymers thereof.

Examples of the polyethylene include not only high density polyethylene, medium density polyethylene, low density polyethylene, linear low density polyethylene and very low density polyethylene, but also copolymers of ethylene and an α-olefin (for example, 1-butene, 1-hexene or 1-octene). The acid-modified polymer is a copolymer obtained by copolymerizing an acid monomer such as maleic anhydride, acrylic acid or methacrylic acid upon preparation of a polyolefin resin by polymerization or a graft-modified copolymer obtained by grafting the acid monomer on the polyolefin resin. The epoxy-modified polymer is a copolymer obtained by copolymerizing a glycidyl group-containing monomer such as glycidyl methacrylate upon preparation of a polyolefin resin by polymerization or a graft-modified copolymer obtained by grafting the glycidyl group-containing monomer on the polyolefin resin.

Examples of the ethylene copolymers include, in addition to the copolymers of ethylene and an α-olefin, ethylene-propylene copolymers, ethylene-vinyl acetate copolymers, ethylene-methyl acrylate copolymers, ethylene-ethyl acrylate copolymers, ethylene-butyl acrylate copolymers and ethylene-methyl methacrylate copolymers.

The polyolefin resin is preferably at least one ethylene copolymer selected from the group consisting of ethylene-vinyl acetate copolymers, ethylene-methyl acrylate copolymers, ethylene-ethyl acrylate copolymers, ethylene-butyl acrylate copolymers and ethylene-methyl methacrylate copolymers, with ethylene-vinyl acetate copolymers (EVA), ethylene-ethyl acrylate copolymers (EEA) being more preferred. These ethylene copolymers are copolymers of ethylene and a monomer containing a polar group, are excellent in compatibility with the thermoplastic random-copolymerized polyester resin and can give a flame-retardant resin composition far excellent in flame retardancy and tensile properties.

The content of a vinyl acetate unit in the ethylene-vinyl acetate copolymer (EVA) is within a range of preferably from 25 to 90% by weight, more preferably from 30 to 85% by weight, particularly preferably from 40 to 85% by weight. The content of the vinyl acetate unit is controlled to at least 25% by weight, whereby various properties, such as mechanical strength, oil resistance and flame retardancy, of the resulting resin composition can be improved. Even in other ethylene copolymers, the proportion of the polar monomer copolymerized, such as ethyl acrylate, is within a range of preferably from 25 to 85% by weight from the viewpoint of balance between various properties.

The melt flow rate (MFR) of the polyolefin resin used in the present invention as measured under conditions of a temperature of 190°C and a load of 2.16 kg is within a range of preferably from 0.1 to 100 g/10 min., more preferably from 0.5 to 50 g/10 min., particularly preferably from 1 to 30 g/10 min. from the viewpoints of extrudability, mechanical strength. The Mooney viscosity (ML₁₊₄, 100°C) of the ethylene-vinyl acetate copolymer is within a range of preferably from 5 to 100, more preferably from 10 to 50.

A weight ration of the thermoplastic random-copolymerized polyester resin to the polyolefin resin is within a range of from 15:85 to 85:15, preferably from 20:80 to 80:20. This weight ratio is more preferably within a range of from 25:75 to 70:30 from the viewpoints of tensile properties, insulation resistance. If the proportion of the polyolefin resin in the resin component is too high, such a resin composition shows a tendency to lower the heat distortion resistance thereof. If the proportion is too low, the flame retardancy may be lowered in some cases.

As examples of the inorganic filler used in the present invention, may be mentioned metal hydroxides such as magnesium hydroxide (synthetic magnesium hydroxide and natural magnesium hydroxide) and aluminum hydroxide; talc (hydrous magnesium silicate); and calcium carbonate.

Among the metal hydroxides, synthetic magnesium hydroxide and natural magnesium hydroxide are preferred in that they are excellent in flame retardancy. Of these magnesium hydroxides, that having an average particle diameter ranging preferably from 0.3 to 7 µm, more preferably from 0.5 to 5 µm and a BET specific surface area ranging from preferably 2 to 20 m²/g, more preferably 3 to 15 m²/g is desirably selected from the viewpoint of dispersibility in the resin component.

As the metal hydroxide, a grade subjected to no surface treatment may be used. However, a grade subjected to a surface treatment with a surface-treating agent, such as a fatty acid such as stearic acid or oleic acid, a phosphoric acid ester, a silane coupling agent, a titanium coupling agent, or an aluminum coupling agent is preferably used from the viewpoint of dispersibility.

As the inorganic filler, besides the metal hydroxides, calcium carbonate and talc (magnesium silicates) are preferred in that they are excellent in flame retardancy. Calcium carbonate preferably has an average particle diameter of 0.02 to 0.2 µm and a BET specific surface area of 2 to 50 m²/g. Talc preferably has an average particle diameter of 0.2 to 10 µm and a BET specific surface area of 2 to 50 m²/g.

To the flame-retardant resin compositions according to the present invention, an inorganic flame retarder or flame retardant auxiliary such as antimony trioxide, zinc stannate, zinc hydroxystannate, zinc borate, zinc carbonate or basic magnesium carbonate; a nitrogen-containing flame retarder such as melamine cyanurate; phosphorus-containing flame retarder such as a condensed phosphoric acid ester; may also be added as needed. A small amount of a halogen-containing flame retarder may also be added to the flame-retardant resin composition according to the present invention as necessary for the end application intended. However, it is generally preferable to add no halogen-containing flame retarder.

The proportion of the inorganic filler used is within a range of from 30 to 250 parts by weight, preferably from 50 to 200 parts by weight per 100 parts by weight of the resin component containing the thermoplastic random-copolymerized polyester resin and the polyolefin resin. If the proportion of the inorganic filler is too low, it is difficult to achieve sufficient flame retardancy. If the proportion is too high, the melt torque of the resulting resin composition becomes too high to lower its extrudability. If the proportion of the inorganic filler is also too high, the resulting resin composition shows a tendency to lower its elongation at break.

To the flame-retardant resin compositions according to the present invention, as needed, already known compounding chemicals such as lubricants, antioxidants, processing stabilizers, hydrolysis inhibitors, heavy metal inactivators, colorants, fillers, reinforcing agents and foaming agents may be added.

The flame-retardant resin compositions according to the present invention can be prepared by mixing the resin component, inorganic filler and other components added as needed by means of an already known melting and mixing machine such as an open roll mill, Banbury mixer, pressure kneader or single-screw or multi-screw mixer. The flame-retardant resin compositions according to the present invention can be formed into pellets.

The flame-retardant resin compositions according to the present invention may be formed into coating layers or insulating tubes. At this time, coating layers or insulating tubes excellent in various properties such as tensile properties and flame retardancy can be obtained without conducting a crosslinking treatment.

On the other hand, when a coating layer or insulating tube formed with the flame-retardant resin composition according to the present invention is desired to be crosslinked, it may be subjected to a crosslinking treatment. Specifically, when a carboxylic acid component or glycol component having a carbon-carbon unsaturated bond is copolymerized into a molecule of the thermoplastic random-copolymerized polyester resin used in the present invention, a thermoplastic random-copolymerized polyester resin, into which the carbon-carbon unsaturated bond has been introduced, is obtained. When a flame-retardant resin composition obtained by blending the thermoplastic random-copolymerized polyester resin, into which the carbon-carbon unsaturated bond has been introduced, is used to produce an electric wire such as an insulated wire, insulated and shielded wire or insulated cable, or an insulating tube, and it is irradiated with ionizing radiation such as an accelerated electron beam or γ-rays, the coating layer or insulating tube can be crosslinked. Alternatively, when an organic peroxide is added to the flame-retardant resin composition obtained by blending the thermoplastic random-copolymerized polyester resin, into which the carbon-carbon unsaturated bond has been introduced, and the resulting mixture is heated, the coating layer or insulating tube can be crosslinked. A polyfunctional monomer may also be added to the flame-retardant resin composition prior to the crosslinking treatment. The crosslinking treatment is conducted, whereby it is expectable that the tensile properties, heat resistance are further improved.

The flame-retardant resin compositions according to the present invention can be suitably used for coating electric wires. An insulated wire has a structure that an insulating coating layer is formed directly on a conductor. The conductor may be a twisted wire formed of plural strands. The flame-retardant resin composition according to the present invention can be extruded and coated on the conductor by means of a melt extruder, thereby forming the coating layer of the insulated wire.

A shielded wire is an electric wire with a shield, and a coaxial cable is representative thereof. When the shielded wire is composed of a single core, it has a structure that the outside of a core conductor is covered with an insulating coating, the outside thereof is coated with a braided wire, which becomes a shield, and an insulating coating layer is further applied as a sheath. The flame-retardant resin composition according to the present invention can be formed into the coating layer for the conductor and besides into the insulating coating layer of the sheath. In the case of a multi-core shielded wire, there are a structure that plural cables are coated collectively with a braided wire, and an insulating coating layer is further applied as a sheath, and a structure that each single core is coated with a braided wire to shield it, and a bundle of the shielded cores is insulated and coated with a sheath. These sheaths may be regarded as coating layers formed from the flame-retardant resin composition according to the present invention.

When a coating layer formed from the flame-retardant resin composition according to the present invention is arranged as the sheath of a single-core or multi-core insulated wire, an insulated cable is obtained. The insulated cable having plural cores also includes a flat cable.

Various electric wires such as the insulated wire having the coating layer formed from the flame-retardant resin composition according to the present invention meet the UL Standards and particularly have high flame retardancy passing the vertical flame test VW-1.

The coating layer formed from the flame-retardant resin composition according to the present invention is not only excellent in initial tensile strength and tensile elongation at break, but also good in tensile properties after thermal aging. As the tensile properties of this coating layer, the tensile strength of generally at least 10.3 MPa, preferably at least 10.5 MPa, more preferably at least 11.0 MPa, and the tensile elongation at break of generally at least 100%, preferably at least 110%, more preferably at least 120% can be achieved. This coating layer can achieve a retention of tensile strength of generally at least 70%, preferably at least 80%, more preferably at least 90%, and a retention of tensile elongation at break of generally at least 65%, preferably at least 70%, more preferably at least 75% after a thermal aging test that a sample is left to stand for 168 hours in a Geer oven of 121°C.

An electric wire having a coating layer formed from the flame-retardant resin composition according to the present invention shows a retention of heat distortion of generally at least 50%, preferably at least 55%, more preferably at least 60% when a wire sample is set in a Geer oven of 121°C to preheat it for 60 minutes, and the sample is then pressed for 10 minutes with a disk-like jig having a weight of 250 g and an outer diameter of 9.5 mm from the top thereof to measure a retention of distortion of the coating layer.

The electric wire having the coating layer formed from the flame-retardant resin composition according to the present invention does not cause cracks at the coating layer when a wire sample is left to stand for an hour in a low-temperature bath of -10°C and then wound on a metal rod having the same size of the outer diameter of the sample at least 10 times at -10°C.

The electric wire having the coating layer formed from the flame-retardant resin composition according to the present invention shows an insulation resistance of at least 100 MΩ·km, preferably at least 150 MΩ·km, more preferably at least 200 MΩ·km when a wire sample (10 m in length) is immersed for an hour in grounded water, a d. c. voltage of 500 V is applied between the conductor and the water in this state to measure an insulation resistance after 3 minutes by a high insulation-resistance tester in accordance with JIS C 3005, and the value is converted to a value per km.

The details of measuring methods of these various properties will be described in EXAMPLES. Many of them are those following the UL Standards. In other words, the electric wires insulated and coated with the flame-retardant resin compositions according to the invention of the present application are suitable for use as electric wires for internal wiring satisfying the UL Standards for Safety and have a feature they are gentle with environment while retaining safety such as fire prevention.

The flame-retardant resin compositions according to the present invention can be melt-extruded into tubular extrudates, thereby producing insulating tubes. Such an insulating tube is expanded in a radial direction thereof under heating conditions, and the form is fixed by cooling, thereby obtaining a shrinkable tube. When a heat shrinkable tube is produced, the thermoplastic random-copolymerized polyester resin, into which a carbon-carbon unsaturated bond has been introduced, is preferably used.

### EXAMPLES

The present invention will hereinafter be described more specifically by the following Synthesis Examples, Examples and Comparative Examples. However, the present invention is not limited to these examples. Evaluating methods of respective physical properties and properties are as follows.

### (1) Evaluation of flame retardancy

Five specimens were provided in a VW-1 vertical test in accordance with UL 1581, and the product was judged as "pass" where all the 5 specimens passed. The criterion thereof is such that when each specimen was fired for 15 seconds repeatedly 5 times, the specimen was judged as pass where the fire was extinguished within 60 seconds, absorbent cotton laid under the bottom of the specimen was not destroyed by the burnt falling object, and kraft paper attached to the top of the specimen was neither burnt nor scorched. With respect to a product, all the 5 specimens of which passed, an average value (average value of 5 specimens) of the longest time of spread in each test was described.

### (2) Evaluation of tensile properties

A tensile test (crosshead speed = 500 mm/min., distance between two gage marks = 20 mm, temperature = 23°C) of a coating layer was performed to measure tensile strength and tensile elongation at break on 3 specimens, respectively, to determine average values thereof. A product, whose tensile strength was at least 10.3 MPa and whose tensile elongation at break was at least 100%, was judged as "good" in accordance with the UL Standards.

### (3) Evaluation of thermal aging resistance

Evaluation as to heat resistance was made by leaving a coating layer to stand for 168 hours in a Geer oven of 121°C to thermally age it and then perform a tensile test under the same conditions as described above. A product, whose retention of elongation [= 100 x (elongation after the aging/elongation before the aging)] was at least 65% and whose retention of tensile strength [= 100 x (tensile strength after the aging/tensile strength before the aging)]was at least 70%, was judged as "good" in accordance with the UL Standards.

### (4) Evaluation of heat distortion resistance

A wire sample was set in a Geer oven of 121°C to preheat it for 60 minutes, and the sample was then pressed for 10 minutes with a disk-like jig having a weight of 250 g and an outer diameter of 9.5 mm from the top thereof to judge a product, whose retention of distortion of an insulating material [= 100 x (thickness after the test/thickness before the test)] was at least 50%, as "pass".

### (5) Evaluation of low temperature property

Respective samples of an insulated wire, a shielded wire and an insulating tube were left to stand for an hour in a low-temperature bath of -10°C and then each wound on a metal rod having the same size of the outer diameter of the sample at least 10 times at -10°C to visually judge whether cracks were cause at a coating layer or not.

### (6) Evaluation of insulation resistance

An electric wire (10 m in length) was immersed for an hour in grounded water, a d.c. voltage of 500 V was applied between the conductor and the water in this state to measure an insulation resistance after 3 minutes by a high insulation-resistance tester in accordance with JIS C 3005, and the value was converted to a value per km. A sample having an insulation resistance of at least 100 MΩ·km was judged to be high in reliability on electric insulating property.

### Synthesis Example 1

### Synthesis of thermoplastic random-copolymerized polyester resin A

A reactor equipped with a stirrer, a thermometer, a nitrogen gas introducing port and a distilling port was charged collectively with 5.0 mol of dimethyl terephthalate, 2.0 mol of dimethyl isophthalate, 3.0 mol of ε-caprolactone and 10.0 mol of 1,4-butanediol under a nitrogen gas atmosphere. After 100 ppm of n-butyl titanate was then added, the mixture was heated to perform a transesterification reaction at a temperature of 160 to 240°C under a nitrogen gas atmosphere, thereby distilling off 98% of a stoichiometric amount of methanol.

Thereafter, 150 ppm of n-butyl titanate was additionally added to conduct a polycondensation reaction for 3 hours at a temperature of 240 to 260°C under a reduced pressure of 0.1 Torr (13.3 Pa). After the polycondensation reaction, 600 ppm of a phosphorus compound (product of Ciba Specialty Chemicals K.K., trade name "Irganox 1222") to inactivate n-butyl titanate of the catalyst. Thereafter, the contents were taken out to obtain a thermoplastic random-copolymerized polyester resin having a melting point of 130°C, a glass transition temperature of 5°C and a MFR of 5 g/10 min. as measured at 190°C under a load of 2.16kg.

### Synthesis Example 2

### Synthesis of thermoplastic random-copolymerized polyester resin B

A reactor equipped with a stirrer, a thermometer, a nitrogen gas introducing port and a distilling port was charged collectively with 6.0 mol of dimethyl terephthalate, 1.0 mol of dimethyl isophthalate, 2.0 mol of ε-caprolactone, 1.0 mol of sebacic acid and 10.0 mol of 1, 4-butanediol under a nitrogen gas atmosphere. Then, 100 ppm of n-butyl titanate was added to perform a transesterification reaction at a temperature of 160 to 240°C under a nitrogen gas atmosphere, thereby distilling off 98% of a stoichiometric amount of methanol.

Thereafter, 150 ppm of n-butyl titanate was additionally added to conduct a polycondensation reaction for 3 hours at a temperature of 240 to 260°C under a reduced pressure of 0. 1 Torr (13.3 Pa). After the polycondensation reaction, 600 ppm of a phosphorus compound (product of Ciba Specialty Chemicals K.K., trade name "Irganox 1222") to inactivate n-butyl titanate of the catalyst. Thereafter, the contents were taken out to obtain a thermoplastic random-copolymerized polyester resin having a melting point of 135°C, a glass transition temperature of -12°C and a MFR of 14 g/10 min. as measured at 190°C under a load of 2.16kg.

The monomer compositions and physical properties of the thermoplastic random-copolymerized polyester resins synthesized in Synthesis Examples 1 and 2 are shown in Table 1.

**Table 1**

| Thermoplastic random-copolymerized polyester resin (code) | A | B |
|---|---|---|
| Acid component (mol) | | |
| Dimethyl terephthalate | 5.0 | 6.0 |
| Dimethyl isophthalate | 2.0 | 1.0 |
| Sebacic acid | | 1.0 |
| ε-Caprolactone | 3.0 | 2.0 |

| Diol component (mol) | | |
|---|---|---|
| 1,4-Butanediol | 10.0 | 10.0 |

| Polymerization process | Collectively charging process | Collectively charging process |
|---|---|---|
| Physical properties | | |
| Melting point (°C) | 130 | 135 |
| Tg (°C) | 5 | -12 |
| MFR (g/10 min.) | 5 | 14 |

### Examples 1 to 10

Respective components were melted and mixed in accordance with their corresponding formulations shown in Table 2 by means of a twin-screw mixer (45 mm in diameter, L/D = 42), and extruded melt strands were cooled and cut to prepare pellets. Numerical values indicating the amounts of the respective components incorporated are parts by weight. Into the resin compositions shown in Table 2, 0.5 part by weight, per 100 parts by weight of a resin component, of oleic acid amide as a lubricant, and 1 part by weight of pentaerythritol-tetrakis[3-(3,5-di-t-butyl-4-hydroxyphenyl) propionate] as an antioxidant were commonly incorporated.

The pellets of each of the resin compositions shown in Table 2 were extruded and coated on an annealed copper wire composed of a twisted 7-strands conductor (outer diameter: 0.48 mm) having a strand diameter of 0.16 mm by means of a melt extruder (30 mm in diameter, L/D = 24) so as to give a coating thickness of 0.45 mm, thereby obtaining respective insulated wires. The results are shown in Table 2.

### Comparative Examples 1 to 8

Respective components were melted and mixed in accordance with their corresponding formulations shown in Table 3 by means of a twin-screw mixer (45 mm in diameter, L/D = 42), and extruded melt strands were cooled and cut to prepare pellets. Numerical values indicating the amounts of the respective components incorporated are parts by weight. Into the resin compositions shown in Table 3, 0.5 part by weight, per 100 parts by weight of a resin component, of oleic acid amide as a lubricant, and 1 part by weight of pentaerythritol-tetrakis[3-(3,5-di-t-butyl-4-hydroxyphenyl) propionate] as an antioxidant were commonly incorporated.

However, in Comparative Example 8, was used a PVC resin composition obtained by incorporating 55 parts by weight of NINP (diisononyl phthalate), 5 parts by weight of antimony trioxide, 5 parts by weight of clay, 10 parts by weight of calcium carbonate and 3 parts by weight of a stabilizer (product of Asahi Denka Kogyo K.K., trade name "RUP140") into 100 parts by weight of a polyvinyl chloride resin (PVC resin; polymerization degree: 1,300).

The pellets of each of the resin compositions shown in Table 3 were extruded and coated on an annealed copper wire composed of a twisted 7-strands conductor (outer diameter: 0.48 mm) having a strand diameter of 0.16 mm by means of a melt extruder (30 mm in diameter, L/D = 24) so as to give a coating thickness of 0.45 mm, thereby obtaining respective insulated wires. The results are shown in Table 3.

**Table 2**

| | | Example | | | | | | | | | |
|---|---|---|---|---|---|---|---|---|---|---|---|
| | | 1 | 2 | 3 | 4 | 5 | 6 | 7 | 8 | 9 | 10 |
| Polyester resin | | | | | | | | | | | |
| Randon-copolymerized polyester | Code A | 20 | 40 | 50 | 50 | 60 | 80 | - | - | - | - |
| Random-copolymerized polyester | Code B | - | - | - | - | - | - | 40 | 60 | 40 | 70 |
| Block-copolymerized polyester | Hytrel 4057 | - | - | - | - | - | - | - | - | - | - |

| Polyolefin resin | | | | | | | | | | | |
|---|---|---|---|---|---|---|---|---|---|---|---|
| EVA-1 | VA=60 wt.% | 80 | 60 | 50 | 50 | 40 | 20 | - | - | - | - |
| EVA-2 | VA=80 wt.% | - | - | - | - | - | - | - | 40 | 60 | - |
| EVA-3 | VA=41 wt.% | - | - | - | - | - | - | 60 | - | - | - |
| EEA | EA=25 wt.% | - | - | - | - | - | - | - | - | - | 30 |

| Inorganic filler | | | | | | | | | | | |
|---|---|---|---|---|---|---|---|---|---|---|---|
| Synthetic magnesium hydroxide | | 100 | 50 | 50 | 50 | - | 50 | 50 | - | 50 | 50 |
| Natural magnesium hydroxide | | - | - | - | - | - | - | 50 | 50 | - | - |
| Calcium carbonate | | - | - | 100 | - | - | 50 | - | - | - | - |
| Talc | | - | - | - | 100 | 150 | - | - | 50 | 50 | 50 |
| Vertical flame test VW-1 | Average fire time (s) | 17 | 41 | 12 | 10 | 17 | 14 | 30 | 25 | 20 | 38 |
| | Judgment | Passed | Passed | Passed | Passed | Passed | Passed | Passed | Passed | Passed | Passed |
| Tensile test of coating layer (initial) | Tensile strength (MPa) | 14.0 | 16.0 | 15.5 | 15.0 | 12.5 | 13.8 | 13.0 | 14.0 | 13.4 | 14.5 |
| | Elongation (%) | 155 | 150 | 145 | 130 | 123 | 135 | 140 | 145 | 150 | 125 |
| Tensile test of coating layer (after aging) 121°C/168 hrs | Retention of tensile strength (%) | 103 | 105 | 105 | 106 | 108 | 110 | 104 | 106 | 102 | 103 |
| | Retention of elongation (%) | 85 | 90 | 83 | 85 | 87 | 87 | 89 | 88 | 90 | 85 |
| Retention of heat distortion (%) | | 80 | 64 | 75 | 70 | 63 | 69 | 72 | 68 | 70 | 72 |
| Self-diameter winding test at -10°C | | Passed | Passed | Passed | Passed | Passed | Passed | Passed | Passed | Passed | Passed |
| insulation resistance (MΩkm) | | 328 | 352 | 340 | 348 | 330 | 345 | 320 | 335 | 350 | 364 |

**Table 3**

| | | Comparative Example | | | | | | | |
|---|---|---|---|---|---|---|---|---|---|
| | | 1 | 2 | 3 | 4 | 5 | 6 | 7 | 8 |
| Polyester resin | | | | | | | | | PVC resin composition |
| Random-copolymerized polyester | Code A | 100 | 100 | - | - | - | - | - | |
| Random-copolymerized polyester | Code B | - | - | 100 | - | - | - | - | |
| Block-copolymerized polyester | Hytrel 4057 | - | - | - | - | - | 100 | 50 | |

| Polyolefin resin | | | | | | | | | |
|---|---|---|---|---|---|---|---|---|---|
| EVA-1 | VA=60 wt.% | - | - | - | 100 | 100 | - | 50 | |
| EVA-2 | VA=80 wt.% | - | - | - | - | - | - | - | |
| EVA-3 | VA=41 wt.% | - | - | - | - | - | - | - | |
| EEA | EA=25 wt.% | - | - | - | - | - | - | - | |
| Inorganic filler | | | | | | | | | |
| Synthetic magnesium hydroxide | | - | 100 | 50 | 150 | - | 150 | 150 | |
| Natural magnesium hydroxide | | - | - | - | - | - | - | - | |
| Calcium carbonate | | - | - | - | - | - | - | - | |
| Talc | | - | - | 100 | - | 150 | - | - | |
| Vertical flame test VW-1 | Average fire time (s) | - | - | - | - | - | - | - | 2 |
| | Judgment | Not passed | Not passed | Not passed | Not Passed | Not passed | Not passed | Not passed | Passed |
| Tensile test of coating layer (initial) | Tensile strength (MPa) | 19.8 | 16.5 | 16.9 | 7.2 | 8.0 | 15.8 | 13.7 | 18.3 |
| | Elongation (%) | 350 | 120 | 110 | 290 | 270 | 115 | 128 | 275 |
| Tensile test of coating layer (after aging) 121°C/168 hrs | Retention of tensile strength (%) | 115 | 110 | 102 | Fused | Fused | 108 | 105 | 85 |
| | Retention of elongation (%) | 92 | 96 | 87 | | | 90 | 85 | 89 |
| Retention of heat distortion (%) | | 93 | 98 | 90 | 0 | 0 | 90 | 80 | 85 |
| Self-diameter winding test at -10°C | | Passed | Passed | Passed | Passed | Passed | Passed | Passed | Passed |
| insulation resistance (MΩkm) | | 550 | 420 | 380 | 72 | 60 | 4 | 3 | 415 |

| | | | | | | | | | |
|---|---|---|---|---|---|---|---|---|---|
| (Note) (1) Hytrel 4057: a thermoplastic block-copolymerized polyester resin produced by Du Pont-Toray Co., Ltd. (soft segment = polyether type) (2) EVA-1: an ethylene-vinyl acetate copolymer [vinyl acetate content = 60% by weight, Mooney viscosity (ML₁₊₄, 100°C) = 27] (3) EVA-2: an ethylene-vinyl acetate copolymer [vinyl acetate content = 80% by weight, Mooney viscosity (ML₁₊₄, 100°C) = 28] (4) EVA-3: an ethylene-vinyl acetate copolymer (vinyl acetate content = 41% by weight, MFR = 2) (5) EEA: an ethylene-ethyl acrylate copolymer (ethyl acrylate content = 25% by weight, MFR = 3) (6) Synthetic magnesium hydroxide: average particle diameter =0.8 µm, BET specific surface area = 8 m²/g, product wet-treated with aminosilane (7) Natural magnesium hydroxide: average particle diameter = 3 µm, BET specific surface area = 12.9 m²/g, product wet-treated with aminosilane (8) Calcium carbonate: average particle diameter = 80 nm, BET specific surface area = 16.5 m²/g (9) Talc: average particle diameter = 8 µm, BET specific surface area = 9.5 m²/g | | | | | | | | | |

### Evaluation

As apparent from the results shown in Table 2, it was found that Examples 1 to 10 each use a resin composition obtained by incorporating inorganic filler(s) such as synthetic magnesium hydroxide, natural magnesium hydroxide, talc (magnesium silicate) and/or calcium carbonate into 100 parts by weight of a resin component composed of a thermoplastic random-copolymerized polyester resin and an ethylene-vinyl acetate copolymer (EVA) or an ethylene-ethyl acrylate copolymer (EEA), each sample passes the vertical flame test, each insulating material has tensile strength of at least 10.3 MPa and a tensile elongation at break of at least 100%, the retention of tensile strength and retention of tensile elongation at break exhibited after aging at 121°C for 7 days (168 hours) are at least 70% and at least 65%, respectively, the retention of at least 50% is exhibited even in the heat distortion test, and the sample also passes the self-diameter winding test at -10°C without causing cracks in the coating. It was also found that each sample exhibits an insulation resistance of at least 100 MΩ· km and is comparable with the insulated wire using the PVC resin in Comparative Example 8.

On the other hand, as apparent from the results shown in Table 3, the insulated wire (Comparative Example 1) using the resin composition obtained by incorporating no inorganic filler into the thermoplastic random-copolymerized polyester resin did not pass the vertical flame test.

The insulated wires (Comparative Examples 2 and 3) respectively using the resin compositions obtained by incorporating the synthetic magnesium hydroxide, and the synthetic magnesium hydroxide and talc as the inorganic filler respectively into the thermoplastic random-copolymerized polyester resin did not pass the vertical flame test.

The insulated wires (Comparative Examples 4 and 5) respectively using the resin compositions obtained by incorporating the synthetic magnesium hydroxide, and talc respectively into the ethylene-vinyl acetate copolymer (EVA) did not pass the vertical flame test.

The insulated wire (Comparative Example 6) using the resin compositions obtained by incorporating the inorganic filler into the thermoplastic block-copolymerized polyester resin (thermoplastic polyester elastomer) containing polybutylene terephthalate as a hard segment and the polyether as a soft segment did not pass the vertical flame test.

Likewise, the insulated wire (Comparative Example 7) using the resin compositions obtained by incorporating the inorganic filler into the blend of the thermoplastic block-copolymerized polyester resin and EVA did not pass the vertical flame test. The insulated wires of Comparative Examples 6 and 7 were found to be as low as less than 100 MΩ· km even in the insulation resistance and hence to be poor in reliability on electric insulating property.

Comparative Example 8 is the insulated wire using a conventional polyvinyl chloride resin composition, and this wire has a demerit that environmental burden is heavy because the coating layer contains chlorine atoms.

### Example 11

### Production and evaluation of insulated and shielded wire

A resin composition obtained by incorporating 2 parts by weight of azobiscarbonamide foaming agent and 1 part by weight of pentaerythritol-tetrakis[3-(3,5-di-t-butyl-4-hydroxyphenyl) propionate] into 100 parts by weight of low density polyethylene (density = 0. 921 g/cm³, MFR = 5) was foamed and extruded on an annealed copper wire composed of a twisted 7-strands conductor (outer diameter: 0.38 mm) having a strand diameter of 0.127 mm by means of a melt extruder (30 mm in diameter, L/D 0 = 24) so as to give an outer diameter of 1.10 mm, thereby forming foamed polyethylene, and a served shielding layer was then formed on the outer periphery thereof with a tin-plated annealed copper wire having an outer diameter of 0.10 mm. The flame-retardant resin composition of Example 3 was extruded and coated on the outer periphery of the shielding layer by means of a melt extruder (45 mm in diameter, L/D = 24, compression ratio = 2.5, full-flighted type) so as to give a coating thickness of 0.35 mm, thereby forming a sheath layer to produce an insulated and shielded wire having an outer diameter of 2.0 mm. The above-described foamed polyethylene layer is such that the extent of foaming was controlled in such a manner that an electrostatic capacity between a central conductor and an outer conductor is 100 ± 5 pF/m.

This insulated and shielded wire was found to pass the vertical flame test, be excellent in flame retardancy as demonstrated by the fact that the average value of the longest fire time of 5 samples is 3 seconds and be also excellent in heat distortion resistance as demonstrated by the fact that the retention of heat distortion is 77%. This wire was also found to be excellent in mechanical properties as demonstrated by the fact that the tensile strength of the sheath is 15.4 MPa, and the tensile elongation at break is 150% and be also excellent in thermal aging resistance as demonstrated by the fact that the retention of tensile strength and retention of elongation at break after aging at 121°C for 7 days are 100% and 85%, respectively. Further, the wire was found to be also excellent in low temperature property as demonstrated by the fact that cracks or the like are not observed at all in the sheath in the self-diameter winding test at -10°C.

### Example 12

### Production and evaluation of insulating tube

The pellets of the flame-retardant resin composition of Example 7 was extruded into a tubular form having an inner diameter of 6. 4 mm and a thickness of 0.5 mm by means of a melt extruder (30 mm in diameter, L/D = 24) to obtain an insulating tube.

This insulating tube was subjected to the vertical flame test by inserting a metal rod having the same diameter as the inner diameter into the tube. As a result, the tube was found to pass the test and be excellent in flame retardancy as demonstrated by the fact that the average value of the longest fire time of 5 samples is 5 seconds. Likewise, the metal rod having the same diameter as the inner diameter was inserted into the tube to perform the heat distortion test. As a result, the tube was found to be also excellent in the heat distortion resistance as demonstrated by the fact that the retention of heat distortion is 70%.

This insulating tube was found to be excellent in mechanical properties as demonstrated by the fact that the tensile strength is 12.5 MPa, and the tensile elongation at break is 145% and be also excellent in thermal aging resistance as demonstrated by the fact that the retention of tensile strength and retention of elongation at break after aging at 121°C for 7 days are 102% and 90%, respectively. Further, the tube was found to be also excellent in low temperature property as demonstrated by the fact that cracks or the like are not observed at all in the self-diameter winding test at -10°C.

### Reference Examples 13 to 15 and Comparative Example 9

"DURANEX 600LP" (trade name, product of WinTech Polymer Ltd.) was used as a thermoplastic random-copolymerized polyester resin C. This thermoplastic random-copolymerized polyester resin C is a modified PBT obtained by collectively charging 0.72 mol of dimethyl terephthalate and 0.28 mol of dimethyl isophthalate as a carboxylic acid component (1.0 mol in total), and 1.0 mol of 1, 4-butanediol as a glycol component and polymerizing them batch-wise or continuously in the presence of a catalyst, and having a melting point of 170°C, a glass transition temperature of 27°C and a MFR of 12.5 g/10 min. as measured at 235°C under a load of 2.16 g.

Incidentally, any of DURANEX series such as DURANEX 400LP, 500KP, 500LP, 600HP, 600JP and 600KP (all, trade names, products of the aforesaid company) may be used as a thermoplastic random-copolymerized polyester resin having the above-described melting point range, glass transition temperature range and MFR range according to the compositional ratio of the monomer components.

Respective components were melted and mixed in accordance with their corresponding formulations shown in Table 4 by means of a twin-screw mixer (45 mm in diameter, L/D = 42), and extruded melt strands were cooled and cut to prepare pellets. Into the resin compositions shown in Table 4, 0.5 part by weight, per 100 parts by weight of a resin component, of oleic acid amide as a lubricant, and 1 part by weight of pentaerythritol-tetrakis[3-(3,5-di-t-butyl-4-hydroxyphenyl) propionate] as an antioxidant were commonly incorporated.

The pellets of each of the resin compositions shown in Table 4 were extruded and coated on an annealed copper wire composed of a twisted 7-strands conductor (outer diameter: 0.48 mm) having a strand diameter of 0.16 mm by means of a melt extruder (30 mm in diameter, L/D = 24) so as to give a coating thickness of 0.45 mm, thereby obtaining respective insulated wires. The results are shown in Table 4.

**Table 4**

| | | Reference Example | | | Comp. Ex. |
|---|---|---|---|---|---|
| | | 13 | 14 | 15 | 9 |
| Polyester resin | | | | | |
| Random-copolymérized Polyester | Code C | 20 | 40 | 30 | 100 |
| Polyolefin resin | | | | | |
| EVA-1 | VA=60 wt.% | - | 40 | 70 | - |
| EVA-2 | VA=80 wt.% | 80 | 40 | - | |

| Inorganic filler | | | | | |
|---|---|---|---|---|---|
| Synthetic magnesium hydroxide | | 120 | 50 | - | 100 |
| Natural magnesium hydroxide | | - | - | 120 | - |
| Calcium carbonate | | - | 100 | - | - |
| Vertical flame test VW-1 | Average fire time (s) | 25 | 40 | 30 | - |
| | Judgment | Passed | Passed | Passed | Not Passed |
| Tensile test of coating layer (initial) | Tensile strength (MPa) | 11.0 | 13.0 | 12.0 | 12.0 |
| | Elongation (%) | 180 | 120 | 150 | 50 |
| Tensile test of coating layer (after aging) 121°C/168 hrs | Retention of tensile strength (%) | 105 | 103 | 100 | 110 |
| | Retention of elongation (%) | 90 | 78 | 80 | 60 |
| Retention of heat distortion (%) | | 85 | 90 | 80 | 100 |
| Self-diameter winding test at -10°C | | Passed | Passed | Passed | Not passed |
| Insulation resistance (MΩkm) | | 300 | 220 | 250 | 560 |

| | | | | | |
|---|---|---|---|---|---|
| (Note) (1) Thermoplastic random-copolymerized polyester resin C: modified PBT produced by WinTech Polymer Ltd., trade name "DURANEX 600LP"; melting point: 170°C; glass transition temperature: 27°C; MFR as measured at 235°C under a load of 2.16kg: 12.5 g/10 min. (2) EVA-1: an ethylene-vinyl acetate copolymer [vinyl acetate content = 60% by weight, Mooney viscosity (ML₁₊₄, 100°C) = 27) (3) EVA-2: an ethylene-vinyl acetate copolymer [vinyl acetate content = 80% by weight, Mooney viscosity (ML₁₊₄, 100°C) = 28] (4) Synthetic magnesium hydroxide: average particle diameter = 0.8 µm, BET specific surface area = 8 m²/g, product wet-treated with aminosilane (5) Natural magnesium hydroxide: average particle diameter = 3 µm, BET specific surface area = 12.9 m²/g, product dry-treated with aminosilane (6) Calcium carbonate: average particle diameter = 80 nm, BET specific surface area = 16.5 m²/g | | | | | |

### Evaluation

As apparent from the results shown in Table 4, it was found that Reference Examples 13 to 15 each use a resin composition obtained by incorporating inorganic filler(s) such as synthetic magnesium hydroxide, natural magnesium hydroxide and/or calcium carbonate into 100 parts by weight of a resin component composed of a thermoplastic random-copolymerized polyester resin and an ethylene-vinyl acetate copolymer (EVA), each sample passes the vertical flame test, each insulating material has tensile strength of at least 10.3 MPa and a tensile elongation at break of at least 100%, the retention of tensile strength and retention of tensile elongation at break exhibited after aging at 121°C for 7 days (168 hours) are at least 70% and at least 65%, respectively, the retention of at least 50% is exhibited even in the heat distortion test, and the sample also passes the self-diameter winding test at -10°C without causing cracks in the coating. Each sample exhibits an insulation resistance of at least 100 MΩ·km.

On the other hand, as apparent from the results shown in Table 4, the insulated wire (Comparative Example 9) using the resin composition obtained by blending no polyolefin resin with the thermoplastic random-copolymerized polyester resin was small in tensile elongation at break and also low in the retention thereof and did not pass the vertical flame test.

### INDUSTRIAL APPLICABILITY

The flame-retardant resin compositions according to the present invention can be utilized as coating materials for electric wires such as insulated wires, insulated and shielded wires, and insulated cables. The flame-retardant resin compositions according to the present invention can be formed into insulating tubes suitable for use in junction of electric wires, and insulation thereof to use them

## Claims

1. A flame-retardant resin composition free from halogen-containing flame retarder, the composition comprising a resin component containing a thermoplastic random-copolymerized polyester resin and a polyolefin resin at a weight ratio of 15:85 to 85:15 and an inorganic filler in a proportion of 30 to 250 parts by weight per 100 parts by weight of the resin component,
wherein the thermoplastic random-copolymerized polyester resin is a resin synthesized by using a carboxylic acid component containing an aromatic dicarboxylic acid component in a proportion of 40 to 90 mol %, and an aliphatic hydroxycarboxylic acid component or aliphatic hydroxycarboxylic acid cyclic ester component or a mixture thereof in a proportion of 10 to 60 mol% with the whole carboxylic acid component regarded as 100 mol%, and
wherein the inorganic filler is at least one inorganic filler selected from the group consisting of metal hydroxides, calcium carbonate and talc.

2. The flame-retardant resin composition according to claim 1, wherein the thermoplastic random-copolymerized polyester resin is a random copolymer obtained by collectively charging the carboxylic acid component and the glycol component into a reactor and then polycondensing the components.

3. The flame-retardant resin composition according to claim 1, wherein the melt flow rate of the thermoplastic random-copolymerized polyester resin as measured under conditions of a temperature of 190°C and a load of 2.16 kg falls within a range of from 0.1 to 100 g/10 min.

4. The flame-retardant resin composition according to claim 1, wherein the melt flow rate of the thermoplastic random-copolymerized polyester resin as measured under conditions of a temperature of 235°C and a load of 2.16 kg falls within a range of from 0.5 to 80 g/10 min.

5. The flame-retardant resin composition according to claim 1, wherein the carboxylic acid component further comprises an aliphatic dicarboxylic acid component in a proportion of at most 40 mol% with the whole carboxylic acid component regarded as 100 mol%.

6. The flame-retardant resin composition according to claim 1, wherein the aromatic dicarboxylic acid component contains a terephthalic acid component and an isophthalic acid component at a molar ratio of 50:50 to 95:5.

7. The flame-retardant resin composition according to claim 1, wherein the polyolefin resin is at least one polyolefin resin selected from the group consisting of polyethylene, ethylene copolymers, polypropylene, propylene copolymers, acid-modified polymers thereof, epoxy-modified polymers thereof, and olefinic thermoplastic elastomers.

8. The flame-retardant resin composition according to claim 7, wherein the polyolefin resin is at least one ethylene copolymer selected from the group consisting of ethylene-vinyl acetate copolymers, ethylene-methyl acrylate copolymers, ethylene-ethyl acrylate copolymers, ethylene-butyl acrylate copolymers and ethylene-methyl methacrylate copolymers.

9. The flame-retardant resin composition according to claim 1, wherein the metal hydroxide is natural magnesium hydroxide, synthetic magnesium hydroxide or a mixture thereof.

10. An electric wire comprising a conductor and a coating layer formed from the flame-retardant resin composition according to claim 1 thereon.

11. The electric wire according to claim 10, which is an insulated wire having the coating layer formed from the flame-retardant resin composition directly on the conductor.

12. The electric wire according to claim 10, which is an insulated and shielded wire comprising, as a sheath, the coating layer formed from the flame-retardant resin composition.

13. The electric wire according to claim 10, which is an insulated cable comprising a single-core or multiconductor insulated wire and the coating layer formed from the flame-retardant resin composition as a sheath thereof.

14. An insulating tube formed from the flame-retardant resin composition according to claim 1.

## Patentansprüche

1. Flammhemmende Harzzusammensetzung, die frei von einem halogenhaltigen Flammhemmmittel ist, wobei die Zusammensetzung eine Harzkomponente umfasst, die ein Zufalls-copolymerisiertes Polyesterharz und ein Polyolefinharz in einem Gewichtsverhältnis von 15:85 bis 85:15 sowie einen anorganischen Füllstoff in einem Anteil von 30 bis 750 Gew.-Teilen pro 100 Gew.-Teile der Harzzusammensetzung enthält,
wobei das thermoplastische Zufalls-copolymerisierte Polyesterharz ein Harz ist, das unter Verwendung einer Carbonsäurekomponente, die eine aromatische Dicarbonsäurekomponente in einem Anteil von 40 bis 90 Mol% und eine aliphatische Hydroxycarbonsäurekomponente oder eine aliphatische zyklische Esterkomponente einer Hydroxycarbonsäure oder eine Mischung davon in einem Anteil von 10 bis 60 Mol% enthält, wobei die gesamte Carbonsäurekomponente als 100 Mol% betrachtet wird, synthetisiert wird, und
worin der anorganische Füllstoff mindestens ein anorganischer Füllstoff ausgewählt aus der Gruppe bestehend aus Metallhydroxiden, Kalziumcarbonat und Talk ist.

2. Flammhemmende Harzzusammensetzung gemäß Anspruch 1, worin das thermoplastische Zufalls-copolymerisierte Polyesterharz ein Zufalls-Copolymer ist, das durch gemeinsames Beschicken eines Reaktors mit der Carbonsäurekomponente und der Glycolkomponente und dann Polykondensation der Komponenten erhalten wird.

3. Flammhemmende Harzzusammensetzung gemäß Anspruch 1, worin die Schmelzflussrate des thermoplastischen Zufalls-copolymerisierten Polyesterharzes, wie unter den Bedingungen einer Temperatur von 190°C und einer Last von 2,16 kg gemessen, in den Bereich von 0,1 bis 100 g/10 min fällt.

4. Flammhemmende Harzzusammensetzung gemäß Anspruch 1, worin die Schmelzflussrate des thermoplastischen Zufalls-copolymerisierten Polyesterharzes, wie unter den Bedingungen einer Temperatur von 235°C und einer Last von 2,16 kg gemessen, in den Bereich von 0,5 bis 80 g/10 min fällt.

5. Flammhemmende Harzzusammensetzung gemäß Anspruch 1, worin die Carbonsäurekomponente weiterhin eine aliphatische Dicarbonsäurekomponente in einem Anteil von höchstens 40 Mol% umfasst, wobei die gesamte Carbonsäurekomponente als 100 Mol% betrachtet wird.

6. Flammhemmende Harzzusammensetzung gemäß Anspruch 1, worin die aromatische Dicarbonsäurekomponente eine Terephthalsäurekomponente und eines Isophthalsäurekomponente in einem molaren Verhältnis von 50:50 bis 95:5 enthält.

7. Flammhemmende Harzzusammensetzung gemäß Anspruch 1, worin das Polyolefinharz mindestens ein Polyolefinharz ausgewählt aus der Gruppe bestehend aus Polyethylen, Ethylencopolymeren, Polypropylen, Propylencopolymeren, säuremodifizierten Polymeren davon, epoxymodifizierten Polymeren davon und olefinischen thermoplastischen Elastomeren ist.

8. Flammhemmende Harzzusammensetzung gemäß Anspruch 7, worin das Polyolefinharz mindestens ein EthylenCopolymer ausgewählt aus der Gruppe bestehend aus Ethylen-Vinylacetat-Copolymeren, Ethylen-Methylacrylat-Copolymeren, Ethylen-Ethylacrylat-Copolymeren, Ethylen-Butylacrylat-Copolymeren und Ethylen-Methylmethacrylat-Copolymeren ist.

9. Flammhemmende Harzzusammensetzung gemäß Anspruch 1, worin das Metallhydroxid natürliches Magnesiumhydroxid, synthetisches Magnesiumhydroxid oder eine Mischung davon ist.

10. Elektrisches Kabel, das einen Leiter und eine aus der flammhemmenden Harzzusammensetzung gemäß Anspruch 1 darauf gebildete Mantelschicht umfasst.

11. Elektrisches Kabel gemäß Anspruch 10, das ein isoliertes Kabel ist, dessen Mantelschicht aus der flammhemmenden Zusammensetzung direkt auf dem Leiter gebildet ist.

12. Elektrisches Kabel gemäß Anspruch 10, das ein isoliertes und abgeschirmtes Kabel ist, das als eine Umhüllung die aus der flammhemmenden Harzzusammensetzung gebildete Mantelschicht umfasst.

13. Elektrisches Kabel gemäß Anspruch 10, das ein isoliertes Kabel ist, das ein isoliertes Einzelkern- oder Multileiter-Kabel und die aus der flammhemmenden Harzzusammensetzung gebildete Mantelschicht als Umhüllung davon umfasst.

14. Isolierröhre, die aus der flammhemmenden Harzzusammensetzung gemäß Anspruch 1 gebildet ist.

## Revendications

1. Composition de résine ignifuge exempte d'agent ignifuge contenant un halogène, la composition comprenant un composant résine contenant une résine de polyester thermoplastique copolymérisée de manière aléatoire et une résine de polyoléfine selon un rapport en poids de 15:85 à 85:15 et une charge inorganique en une proportion de 30 à 250 parties en poids pour 100 parties en poids du composant résine,
dans laquelle la résine de polyester thermoplastique copolymérisée de manière aléatoire est une résine synthétisée en utilisant un composant acide carboxylique contenant un composant acide dicarboxylique aromatique en une proportion de 40 à 90 % en moles et un composant acide hydroxycarboxylique aliphatique ou un composant ester cyclique d'acide hydroxycarboxylique aliphatique ou un mélange de ceux-ci en une proportion de 10 à 60 % en moles, l'ensemble du composant acide carboxylique étant considéré comme représentant 100 % en moles, et
dans laquelle la charge inorganique est au moins une charge inorganique choisie dans le groupe constitué par les hydroxydes métalliques, le carbonate de calcium et le talc.

2. Composition de résine ignifuge selon la revendication 1, dans laquelle la résine de polyester thermoplastique copolymérisée de manière aléatoire est un copolymère aléatoire obtenu par chargement collectif du composant acide carboxylique et du composant glycol dans un réacteur, puis par polycondensation des composants.

3. Composition de résine ignifuge selon la revendication 1, dans laquelle l'indice de fluidité de la résine de polyester thermoplastique copolymérisée de manière aléatoire, mesuré dans des conditions de température de 190 °C et une charge de 2, 16 kg, est compris dans la plage allant de 0,1 à 100 g/10 minutes.

4. Composition de résine ignifuge selon la revendication 1, dans laquelle l'indice de fluidité de la résine de polyester thermoplastique copolymérisée de manière aléatoire, mesuré dans des conditions de température de 235 °C et une charge de 2, 16 kg, est compris dans la plage allant de 0,5 à 80 g/10 minutes.

5. Composition de résine ignifuge selon la revendication 1, dans laquelle le composant acide carboxylique comprend en outre un composant acide dicarboxylique aliphatique en une proportion d'au plus 40 % en moles, l'ensemble du composant acide carboxylique étant considéré comme représentant 100 % en moles.

6. Composition de résine ignifuge selon la revendication 1, dans laquelle le composant acide dicarboxylique aromatique comprend un composant acide téréphtalique et un composant acide isophtalique selon un rapport molaire de 50:50 à 95:5.

7. Composition de résine ignifuge selon la revendication 1, dans laquelle la résine de polyoléfine est au moins une résine de polyoléfine choisie dans le groupe constitué par le polyéthylène, les copolymères d'éthylène, le polypropylène, les copolymères de propylène, les polymères modifiés par un acide de ceux-ci, les polymères modifiés par un époxy de ceux-ci, et les élastomères thermoplastiques oléfiniques.

8. Composition de résine ignifuge selon la revendication 7, dans laquelle la résine de polyoléfine est au moins un copolymère d'éthylène choisi dans le groupe constitué par les copolymères d'éthylène-acétate de vinyle, les copolymères d'éthylène-acrylate de méthyle, les copolymères d'éthylène-acrylate d'éthyle, les copolymères d'éthylène-acrylate de butyle et les copolymères d'éthylène-méthacrylate de méthyle.

9. Composition de résine ignifuge selon la revendication 1, dans laquelle l'hydroxyde métallique est un hydroxyde de magnésium naturel, un hydroxyde de magnésium synthétique ou un mélange de ceux-ci.

10. Fil électrique comprenant un conducteur et une couche de revêtement formée à partir de la composition de résine ignifuge selon la revendication 1 sur celui-ci.

11. Fil électrique selon la revendication 10, qui est un fil isolé comprenant la couche de revêtement formée à partir de la composition de résine ignifuge directement sur le conducteur.

12. Fil électrique selon la revendication 10, qui est un fil isolé et protégé comprenant, comme gaine, la couche de revêtement formée à partir de la composition de résine ignifuge.

13. Fil électrique selon la revendication 10, qui est un câble isolé comprenant un fil isolé monoconducteur ou multiconducteur et la couche de revêtement formée à partir de la composition de résine ignifuge comme gaine de celui-ci.

14. Tube isolant formé à partir de la composition de résine ignifuge selon la revendication 1.
